(19) Europäisches Patentamt
European Patent Office
Office européen des brevets

(11) Veröffentlichungsnummer : **0 312 872 B1**

(12) # EUROPÄISCHE PATENTSCHRIFT

(45) Veröffentlichungstag der Patentschrift :
**04.09.91 Patentblatt 91/36**

(51) Int. Cl.$^5$ : **C08F 8/14, C08G 63/64**

(21) Anmeldenummer : **88116779.5**

(22) Anmeldetag : **10.10.88**

(54) **Neue Pfropfcopolymere, Verfahren zu ihrer Herstellung und ihre Verwendung.**

(30) Priorität : **20.10.87 DE 3735466**

(43) Veröffentlichungstag der Anmeldung :
**26.04.89 Patentblatt 89/17**

(45) Bekanntmachung des Hinweises auf die Patenterteilung :
**04.09.91 Patentblatt 91/36**

(84) Benannte Vertragsstaaten :
**DE FR GB IT NL**

(56) Entgegenhaltungen :
**DE-A- 1 770 144**
**DE-A- 1 795 840**
**DE-A- 2 019 992**
**DE-A- 2 019 993**
**DE-A- 2 019 994**
**DIE ANGEWANDTE MAKROMOLEKULARE CHEMIE, Band 60/61, Nr. 861, 1977, Seiten 125-137; D. MARGOTTE et al.: "Polycarbonat-gepfropfte Polyvinylverbindungen"**

(73) Patentinhaber : **BAYER AG**
**W-5090 Leverkusen 1 Bayerwerk (DE)**

(72) Erfinder : **Dujardin, Ralf, Dr.**
**Bodelschwinghstrasse 18**
**W-4150 Krefeld (DE)**
Erfinder : **Meyer, Rolf-Volker, Dr.**
**Buchheimer Strasse 23**
**W-4150 Krefeld (DE)**
Erfinder : **Sümmermann, Klaus, Dr.**
**Wolfskaul 12**
**W-5000 Köln 80 (DE)**
Erfinder : **Serini, Volker, Dr.**
**Sebastian-Kneipp-Weg 2**
**W-4150 Krefeld (DE)**
Erfinder : **Oels, Udo, Dr.**
**Wallenburgdyck 101**
**W-4150 Krefeld (DE)**
Erfinder : **Grigo, Ulrich, Dr.**
**Michelsheide 9**
**W-4152 Kempen 3 (DE)**

**EP 0 312 872 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

**Beschreibung**

Die Erfindung betrifft neue Pfropfcopolymere, Verfahren zu ihrer Herstellung, ihre Verwendung als Fließhilfsmittel für aromatische Polyester und Polyestercarbonate und als Verträglichkeitsvermittler in Blends aus Vinylpolymeren und aromatischen Polyestern sowie Mischungen aus den neuen Pfropfcopolymeren und aromatischen Polyestern oder Polyestercarbonaten.

Neue Pfropfcopolymere sind Verbindungen, die statistisch der Formel (I)

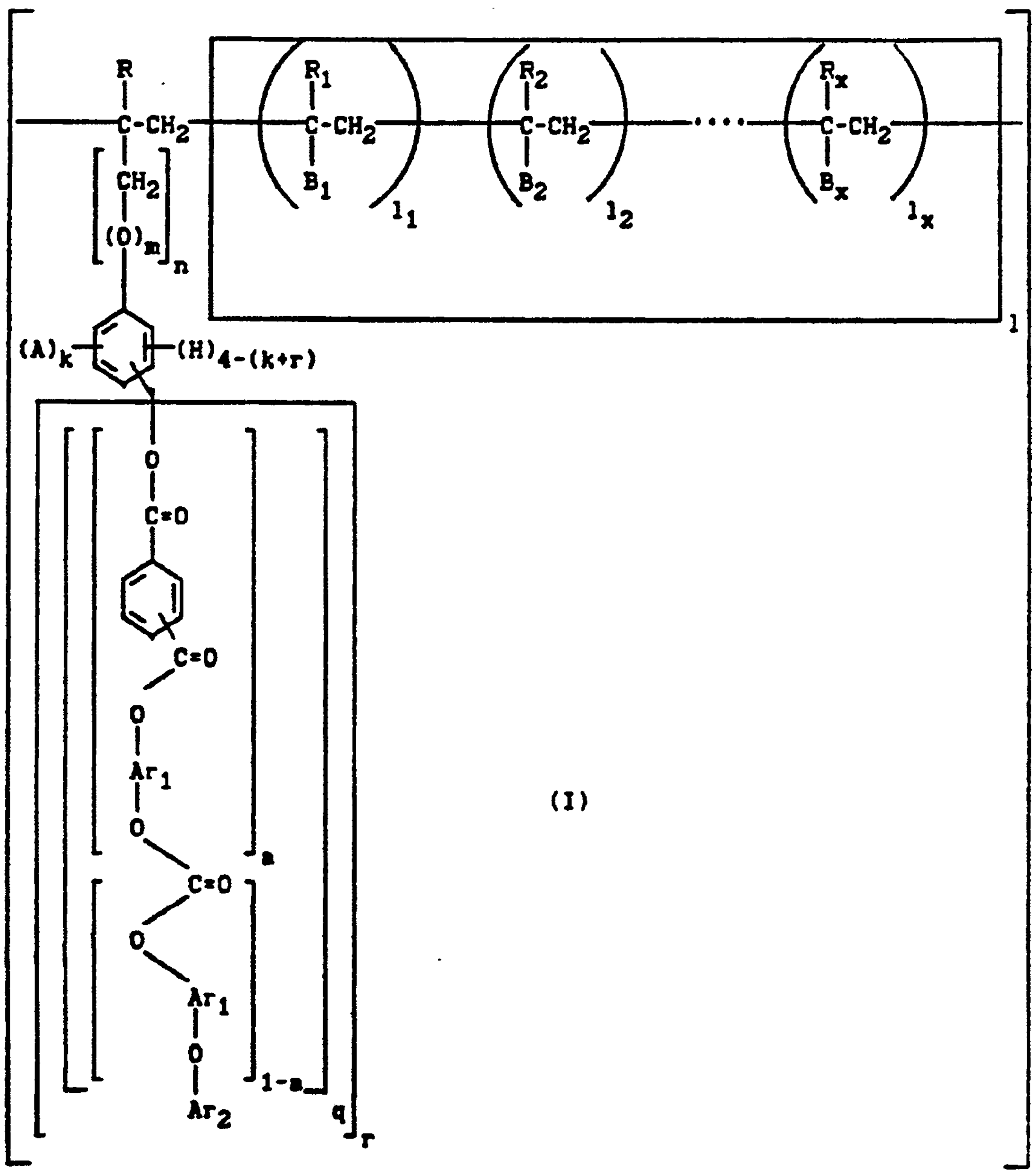

(I)

entsprechen, worin

| | |
|---|---|
| R, $R_1$, $R_2$...$R_x$ | gleich oder verschieden sein können und für Wasserstoff, $C_1$-$C_6$-Alkyl, $C_3$-$C_6$-Cycloalkyl, $C_6$-$C_{12}$-Aryl, $C_7$-$C_{15}$-Alkylaryl oder $C_7$-$C_{13}$-Arylalkyl stehen, |
| A | Halogen, $C_1$-$C_{10}$-Alkyl, $C_6$-$C_{12}$-Aryl oder $C_1$-$C_7$-Alkoxy bedeutet, |
| $B_1$, $B_2$...$B_x$ | gleich oder verschieden sein können und für —CN, —$CO_2$R, —OR oder für die Formel |

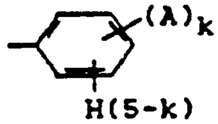

stehen, in der R und A die obige Bedeutung haben,

$Ar_1$ der Formel (II)

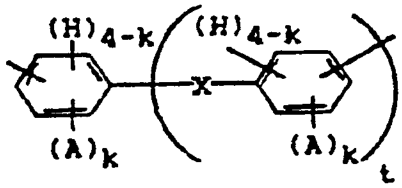

(II)

entspricht, in der

A die obige Bedeutung hat und

X für O, S, $SO_2$, CO, $C_3$-$C_6$-Cycloalkyliden steht oder eine chemische Einfachbindung bedeutet oder für $Z_2$-C-$Z_1$ steht, worin $Z_1$ und $Z_2$ die Bedeutung von R haben und t = 0 oder 1 sein kann,

$Ar_2$ für einen monofunktionellen Rest der Formel IIIa oder IIIb

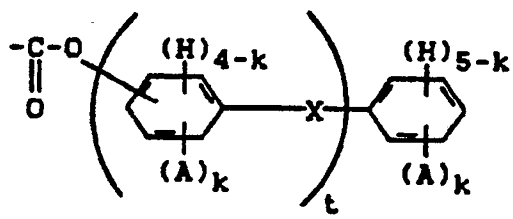

(IIIa)

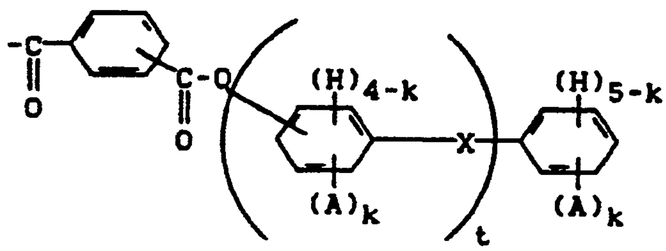

(IIIb)

steht, worin

A, X und t die obige Bedeutung besitzen und

k 0, 1, 2, 3 oder 4, bevorzugt 0 und 1 ist,

l für eine Zahl von 5 bis 200 steht,

$l_1 + l_2 + ...l_x = 1$ ist,

m und n 0 oder 1 bedeuten,

a 1 sein kann oder Werte zwischen 0,5 und 1 annehmen kann, bevorzugt 0,55 bis 0,95,

q eine Zahl von 5 bis 100 ist, bevorzugt 25 bis 50,

r 1 oder 2, bevorzugt 1, und

s eine Zahl von 1 bis 1000 bedeuten, wobei das Produkt aus s und l eine Zahl von 5 bis 200000, bevorzugt

50 bis 4000, ergibt.

Als Alkylreste der Formel I seien genannt : Methyl, Ethyl, Propyl, Butyl, bevorzugt Methyl ;
als Cycloalkylreste Cyclopentyl, Cyclohexyl, bevorzugt Cyclohexyl ;
als Alkylreste Phenyl, Biphenyl, Naphthyl, bevorzugt Phenyl ;
als Alkylarylreste Toluyl, Xylenyl, bevorzugt Toluyl ;
als Arylalkylreste Benzyl, Phenylethyl, bevorzugt Benzyl ;
und als Alkyloxyreste Methoxy, Ethoxy, bevorzugt Methoxy.

Als Halogenatome seien genannt : Fluor, Chlor, Brom, bevorzugt Chlor.

Besonders bevorzugt seien als Reste R, $R_1$, $R_2$... $R_x$ Wasserstoff und Methyl genannt, als Rest A Chlor, Methyl und Ethyl.

Gegenstand der vorliegenden Erfindung ist auch ein Verfahren zur Herstellung der neuen Pfropfcopolymeren der Formel (I)

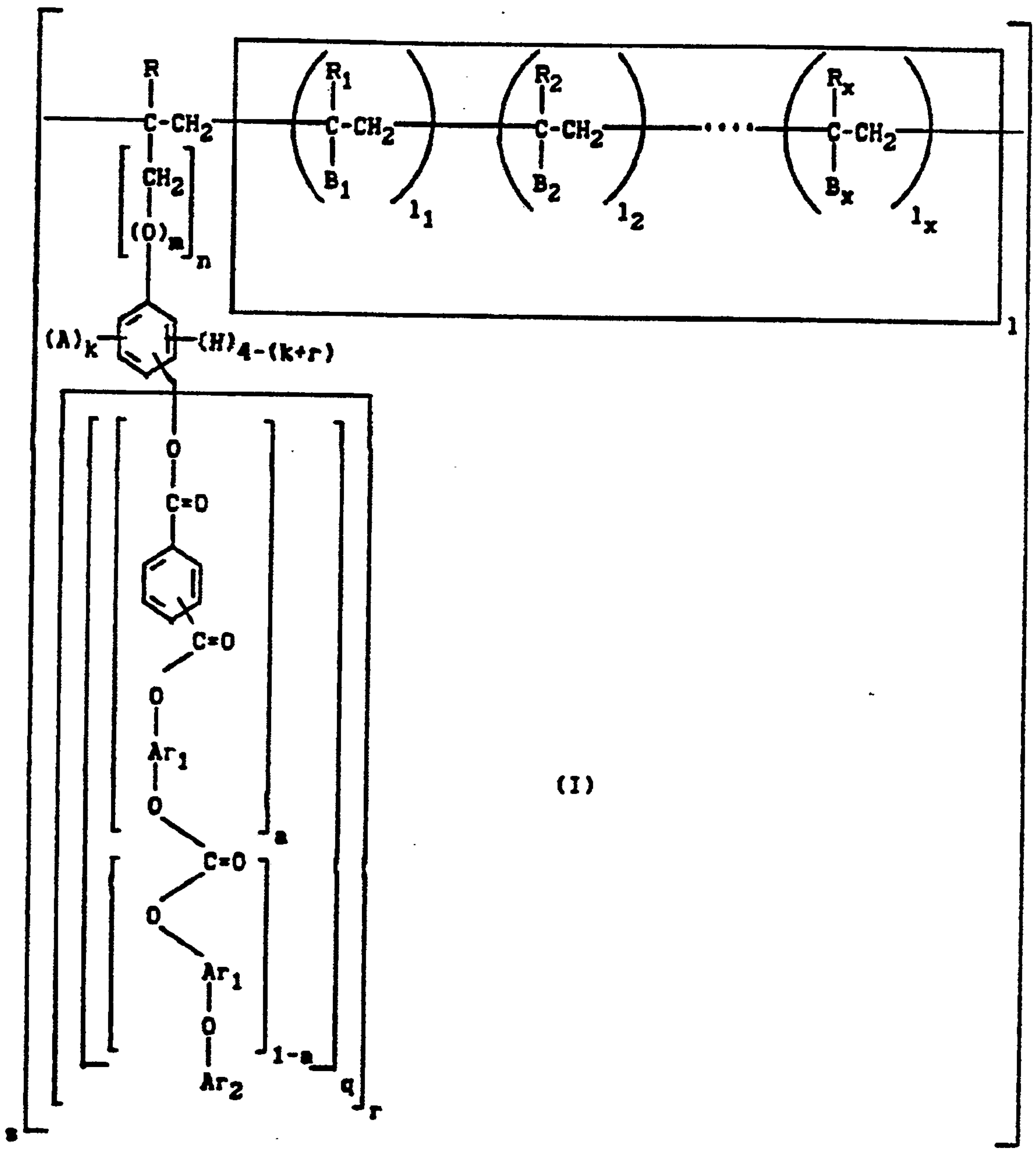

(I)

worin

R, $R_1$, $R_2$...$R_x$ gleich oder verschieden sein können und für Wasserstoff, $C_1$-$C_6$-Alkyl, $C_3$-$C_6$-Cycloalkyl, $C_6$-$C_{12}$-Aryl, $C_7$-$C_{15}$-Alkylaryl oder $C_7$-$C_{13}$-Arylalkyl stehen,

A Halogen, $C_1$-$C_{10}$-Alkyl, $C_6$-$C_{12}$-Aryl oder $C_1$-$C_7$-Alkoxy bedeutet,

$B_1$, $B_2$...$B_x$ gleich oder verschieden sein können und für —CN, —$CO_2R$, —OR oder für die Formel

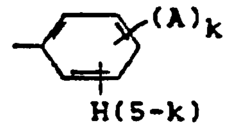

stehen, in der R und A die obige Bedeutung haben,

$Ar_1$ der Formel (II)

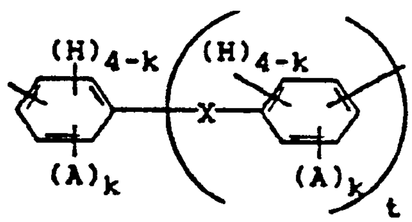 (II)

entspricht, in der

A die obige Bedeutung hat und

X für O, S, $SO_2$, CO, $C_3$-$C_8$-Cycloalkyliden steht oder eine chemische Einfachbindung bedeutet oder für $Z_2$-C-$Z_1$ steht, worin $Z_1$ und $Z_2$ die Bedeutung von R haben und t = 0 oder 1 sein kann,

$Ar_2$ für einen monofunktionellen Rest der Formel IIIa oder IIIb

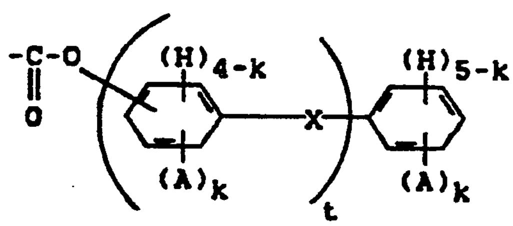 (IIIa)

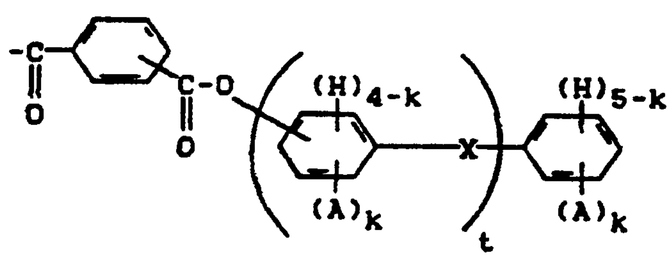 (IIIb)

steht, worin

A, X und t die obige Bedeutung besitzen und

k 0, 1, 2, 3 oder 4 ist, bevorzugt 0 und 1,

l für eine Zahl von 5 bis 200 steht,

$l_1 + l_2 + l_{...x} = 1$ ist,

m und n 0 oder 1 bedeuten,

a 1 sein kann oder Werte zwischen 0,5 und 1 annehmen kann, bevorzugt 0,55 bis 0,95 ;
q eine Zahl von 5 bis 100 ist, bevorzugt 30 bis 50,
r 1 oder 2, bevorzugt 1, und
s eine Zahl von 1 bis 1000 bedeuten, wobei das Produkt aus s und l eine Zahl von 5 bis 200000, bevorzugt 50 bis 4000, ergibt, das dadurch gekennzeichnet ist, daß man Mischpolymerisate mit seitenständigen funktionellen Gruppen der Formel (IV),

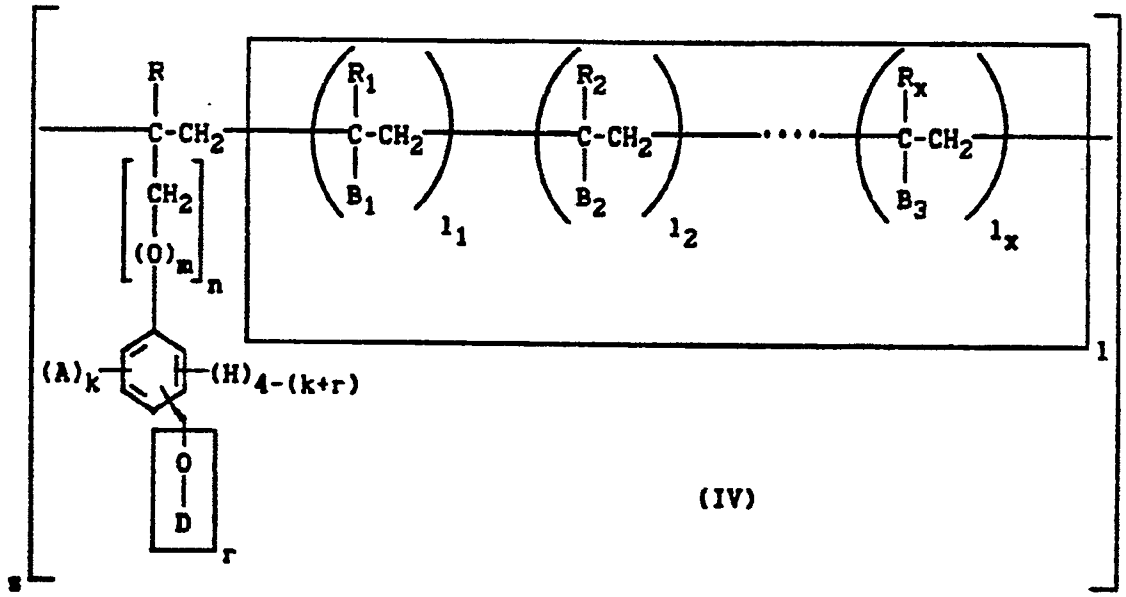

(IV)

worin

D für Wasserstoff oder einen Chlorkohlensäureester-, Monophenylkohlensäureester- oder Trimethylsilylrest steht und
$R, R_1, R_2 ... R_x$, A, B sowie k, $l_1, l_2 ... l_x$, m, n, r und s die obengenannte Bedeutung besitzen,

mit zweiwertigen, gegebenenfalls kernsubstituierten Phenolen, aromatischen Dicarbonsäurechloriden und carbonatbildenden Verbindungen in einem Phasengrenzflächenverfahren under Verwendung von Säureakzeptoren bei 0 bis 50°C, gegebenenfalls in Gegenwart von einwertigen Phenolen und gegebenenfalls unter Zusatz von Katalysatoren umsetzt.

Die Mischpolymerisate der Formel (IV) können durch Mischpolymerisation ein- oder zweiwertiger Phenole der Formel (V) mit einem ethylenisch ungesättigten Substituenten

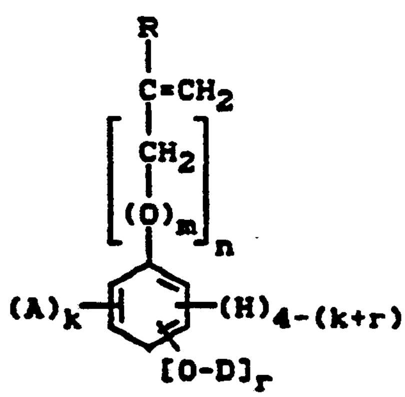

(V),

also z.B. von o-, m- oder p-Isopropenylphenol, p-Isopropenyl-o-kresol, 2,6-Dichlor-p-isopropenylphenol, m-

und p-Vinylphenol, p-Vinyl-o-kresol, p-Allylphenol, m-Allyloxyphenol, 3,4-Dihydroxyallylbenzol und 2,4-Dihydroxyallylbenzol oder deren Chlorkohlensäure- oder Monophenylkohlensäureester oder der entsprechenden Trimethylsilanderivate, mit copolymerisationsfähigen Vinylderivaten der Formel (VI)

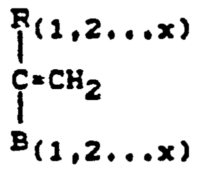

(VI)

im Molverhältnis 1 : ($l_1$ + $l_2$ + ... $l_z$) nach an sich bekannten Verfahren erhalten werden, so z.B. durch ionisches Mischpolymerisieren (vgl. z.B. die deutsche Patentschrift 1153527) oder bevorzugt durch radikalisches Mischpolymerisieren, vorzugsweise unter Verwendung der verkappten Phenol, insbesondere der Trimethylsilanderivate (vgl. z.B. DE-OS 1795840). Letztere sind leicht erhältlich durch Umsetzung der entsprechenden Phenole mit z.B. Hexamethyldisilazan oder mit Trimethylchlorsilan in Gegenwart von Säureakzeptoren.

Zur Herstellung der Mischpolymerisate können als Reaktionspartner zu dem ungesättigten Phenol z.B. verwendet werden : Methylmethacrylat, Butylacrylat, Acrylnitril, Styrol, α-Methylstyrol, Vinyltoluol, p-Ethylstyrol, styrol, 2,4-Dimethylstyrol, o-Chlorstyrol und 2,5-Dichlorstyrol, bevorzugt Styrol, α-Methylstyrol, Vinyltoluol, p-Ethylstyrol, 2,4-Dimethylstyrol, o-Chlorstyrol und 2,5-Dichlorstyrol sowie Gemische derselben.

Das mittlere Molekulargewicht der Mischpolymerisate kann sich im Bereich von 0,5 bis 2000 kg/mol bewegen, bevorzugt ist aber der Bereich von 5 bis 400 kg/mol (ermittelt durch Gelpermeationschromatographie).

Als zweiwertige, gegebenenfalls kernsubstituierte Phenole, die mit den Mischpolymerisaten der Formel IV zur Pfropfreaktion eingesetzt werden können, seien z.B. genannt :
Bis-(hydroxyphenyl)-alkane,
Bis-(hydroxyphenyl)-cycloalkane,
Bis-(hydroxyphenyl)-sulfide,
Bis-(hydroxyphenyl)-ether,
Bis-(hydroxyphenyl)-ketone,
Bis-(hydroxyphenyl)-sulfoxide,
Bis-(hydroxyphenyl)-sulfone,
α,α'-Bis-(hydroxyphenyl)-diisopropylbenzole sowie deren kernalkylierte und kernhalogenierte Verbindungen.
Diese und weitere geeignete Diphenole sind z.B. in den US-Patentschriften 3028365 ; 2999835 ; 3148172 ; 3275601 ; 2991273 ; 3271367 ; 3062781 und 2999846, in den deutschen Offenlegungsschriften 1570703 ; 2063050 ; 2063052 ; 2211956 ; 2211957, der französischen Patentschrift 1561518 und der Monographie "H. Schnell, Chemistry and Physics of Polycarbonates", Interscience Publishers, New York, 1964 beschrieben.

Bevorzugte Diphenole sind z.B. :
2,2-Bis-(4-hydroxyphenyl)-propan,
2,4-Bis-(4-hydroxyphenyl)-2-methylbutan,
1,1-Bis-(4-hydroxyphenyl)-cyclohexan,
α,α'-Bis-(4-hydroxyphenyl)-p-diisopropylbenzol,
2,2-Bis-(3-methyl-4-hydroxyphenyl)-propan,
2,2-Bis-(3-chlor-4-hydroxyphenyl)-propan,
Bis-(3,5-dimethyl-4-hydroxyphenyl)-methan,
Bis-(3,5-dimethyl-4-hydroxyphenyl)-sulfon,
2,4-Bis-(3,5-dimethyl-4-hydroxyphenyl)-2-methylbutan,
1,1-Bis-(3,5-dimethyl-4-hydroxyphenyl)-cyclohexan,
α,α'-Bis-(3,5-dimethyl-4-hydroxyphenyl)-p-diisopropylbenzol,
2,2-Bis-(3,5-dichlor-4-hydroxyphenyl)-propan und
2,2-Bis-(3,5-dibrom-4-hydroxyphenyl)-propan.

Besonders bevorzugte Diphenole sind z.B. :
2,2-Bis-(4-hydroxyphenyl)-propan,
2,2-Bis-(3,5-dimethyl-4-hydroxyphenyl)-propan,
2,2-Bis-(3,5-dichlor-4-hydroxyphenyl)-propan,
2,2-Bis-(3,5-dibrom-4-hydroxyphenyl)-propan,
1,1-Bis-(4-hydroxyphenyl)-cyclohexan, wobei 2,2-Bis-(4-hydroxyphenyl)-propan ganz besonders bevorzugt ist.

Als geeignete einwertige, gegebenenfalls kernsubstituierte aromatische Phenole, die zu den $Ar_2$-Endgruppen führen können, seien genannt : Phenol, die Kresole, die Mono- und Dichlorphenole, p-tert.-Butylphenole und langkettige $C_8$-$C_{12}$-Phenole.

Als carbonatbildende Verbindungen kommen z.B. erfindungsgemäß in Frage : die Carbonylhalogenide, wie Carbonylbromid, Carbonylchlorid (Phosgen) sowie deren Gemische. Außerdem können Bishalogenformiate zweiwertiger Phenole verwendet werden, wie Bischlorformiate von 2,2- Bis-(4-hydroxyphenyl)-propan, 2,2-Bis-(4-hydroxy-3,5-dichlorphenyl)-propan und Hydrochinon. Bevorzugt kommt als carbonatbildende Verbindung in Frage Phosgen.

Als aromatische Dicarbonsäurehalogenide, die erfindungsgemäß eingesetzt werden können, seien genannt: Terephthalsäuredichlorid, Isophthalsäuredichlorid und Phthalsäuredichlorid, die entsprechenden Bromide, sowie deren Gemische. Bevorzugt sind Terepthalsäure- und Isophthalsäuredichlorid sowie deren Gemische.

Die aromatischen Polyester oder Polyestercarbonat-Seitenketten werden in bekannter Weise nach dem Phasengrenzflächenverfahren, wie es von H. Schnell in "Chemistry and Physics of Polycarbonates", Polymer Reviews, Vol. IX, S. 33 ff, Interscience Publ., (1964) beschrieben wird, bei Temperaturen von 0 bis 50°C, bevorzugt 10 bis 25°C, in Gegenwart von tert.-Aminen und/oder quartären Ammoniumverbindungen als Phasentransferkatalysatoren hergestellt. Dabei dient z.B. als organische Phase Methylenchlorid oder Methylenchlorid mit einem zusätzlichen Co-Lösungsmittel, wie Chlorbenzol, und als wäßrige Phase eine Alkalihydroxid-Lösung, wie Natriumhydroxid.

Das Aufpfropfen der aromatischen Polyester- oder Polyestercarbonatketten erfolgt, soweit es sich um Mischpolymerisate mit freien Hydroxy- oder mit Chlorkohlensäureester- oder Trimethylsilyloxygruppen handelt, vorzugsweise nach dem Phasengrenzflächenverfahren in bekannter Weise nach H. Schnell (Literaturzitat siehe oben) unter Verwendung von Säureakzeptoren, wie tertiären Aminen bzw. Alkali- oder Erdalkalihydroxiden, vorzugsweise unter Zusatz von Katalysatoren, insbesondere tertiären Aminen und/oder quartären Ammoniumverbindungen bei Temperaturen von 0 bis 50°C, bevorzugt 10 bis 25°C.

Die anzuwendende Menge zweiwertiger, gegebenenfalls kernsubstituierter Phenole, aromatischer Dicarbonsäurehalogenide und carbonsäurebildende Verbindungen pro Mol Mischpolymerisat (IV) können in weiten Grenzen schwanken, je nachdem, ob man kürzere oder längere Polyester- oder Polyestercarbonat-Seitenketten zu erhalten wünscht, wobei gewährleistet sein muß, daß der aromatische Polyesteranteil in den Polyestercarbonat-Seitenketten mindestens 50 Mol-% beträgt.

Auf jede phenolische Hydroxylgruppe des Mischpolymerisats soll jedoch mindestens q Mol zweiwertiges Phenol, q.a. Mol Dicarbonsäurehalogenid sowie q · (1-a) Mol an carbonatbildender Verbindung entfallen, so daß auf jede Phenolgruppe des Mischpolymerisats mindestens eine Polyester- bzw. Polyestercarbonatkette aufgepfropft wird. Die bevorzugten Mengen ergeben sich aus den Zahlenwerten für q der allgemeinen Formel (I).

Das mittlere Molekulargewicht der Polyester- bzw. Polyestercarbonat-Seitenketten wird in bekannter Weise durch Zusatz von 2 bis 40 Mol% ($\hat{=}$ q von 5 bis 100), bevorzugt 4 bis 8 Mol% ($\hat{=}$ q von 25 bis 50) Kettenabbrecher (bezogen auf die eingesetzte Menge an zweiwertigem Phenol) geregelt.

Die wirksame Menge an Kettenabbrecher ergibt sich als Summe aus der Menge an zugesetzten einwertigem Phenol, das zu den $Ar_2$ Endgruppen führt, plus der Menge an ein- oder zweiwertigem Phenol der Formel IV, die in der für die Pfropfungsreaktion eingesetzten Menge Mischpolymerisat enthalten ist.

Das mittlere Molekulargewicht ($\overline{M}_n$) der Polyester- bzw. Polyestercarbonat-Seitenketten, kann so in bekannter Weise auf Werte von etwa 1,5 bis 35,8 kg/mol, bevorzugt von 7,65 bis 17,9 kg/mol eingestellt werden.

Ein weiterer Gegenstand der Erfindung ist die Verwendung der neuen Pfropfcopolymeren der Formel (I) als Fließhilfsmittel für aromatische Polyester und Polyestercarbonate sowie die Verwendung als Verträglichkeitsvermittler in Blends aus Vinylpolymeren, z.B. Polystyrol, und aromatischen Polyestern.

Darüber hinaus sind Gegenstand der Erfindung leichter fließende, thermoplastisch verarbeitende Mischungen aus

A) 75 bis 99,5 Gew.-% eines aromatischen Polyesters oder aromatischen Polyestercarbonats aus Diphenolen und Iso- und/oder Terephthalsäure sowie Phosgen und

B) 0,5 bis 25 Gew.-% des neuen Pfropfcopolymeren der Formel (I),

wobei die Summe der Komponenten A) und B) sich zu 100 Gew.-% ergänzen.

Bevorzugt enthält die Mischung 85 bis 98 Gew.-% an Komponente A) und 2 bis 15 Gew.-% an Komponente B), besonders bevorzugt 90 bis 95 Gew.-% an Komponente A) und 5 bis 10 Gew.-% an Komponente B).

Als Komponente A) der erfindungsgemäßen Mischungen kommen übliche aromatische Polyester oder aromatische Polyestercarbonate in Betracht auf der Basis von Diphenolen und Iso- und/oder Terephthalsäure

sowie Phosgen oder andere carbonatbildende Verbindungen.

Als Diphenole kommen die bereits erwähnten Diphenole in Betracht.

Die Herstellung der aromatischen Polyester oder Polyestercarbonate der Komponente A) erfolgt bevorzugt nach dem zuvor erwähnten Phasengrenzflächenverfahren durch Umsetzung der genannten Diphenole mit Iso- und/oder Terephthalsäure in Gegenwart von Phosgen oder anderen carbonatbildenden Verbindungen. Das Verhältnis der Iso- zu Terephthalsäurereste in den aromatischen Polyestern und Polyestercarbonaten der Komponente A) beträgt 3 : 7 bis 7 : 3, bevorzugt 4,5 : 5,5 bis 5,5 : 4,5.

Die aromatischen Polyester und Polyestercarbonate der Komponente A) besitzen in der Regel relative Viskositäten von 1,18 bis 2,0, vorzugsweise von 1,2 bis 1,5 (gemessen in einer Lösung mit einer Konzentration von 0,5 g Substanz in 100 ml Methylenchlorid bei 25°C).

Als Kettenabbrecher für aromatischen Polyester und Polyestercarbonate der Komponente A) werden vorzugsweise Phenol, Alkylphenole mit $C_1$-$C_{12}$-Alkylgruppen, halogenierte Phenole, Hydroxydiphenyl, Naphthole, Chlorkohlensäureester aus solchen phenolischen Verbindungen und Chloride von aromatischen Monocarbonsäuren, die gegebenenfalls durch $C_1$-$C_{22}$-Alkylgruppen und Halogenatome substituiert sein können, in Mengen von 0,1 bis 10 Mol-%, bevorzugt 3 bis 5 Mol-% (im Falle von Phenolen bezogen auf Diphenole, im Falle von Säurechloriden bezogen auf Säuredichloride), eingesetzt.

As Verzweigungsmittel für die aromatischen Polyester und Polyestercarbonate der Komponente A) lassen sich 3- oder mehrfunktionelle Carbonsäurechloride oder 3- oder höherwertige Phenole in Mengen von etwa 0,01 bis 1 Mol-%, bevorzugt 0,1 bis 0,5 Mol-%, bezogen auf eingesetzte Dicarbonsäuredichloride bzw. auf eingesetzte Diphenole, verwenden.

Die aromatischen Polyestercarbonate der Komponente A) können bis zu 10, vorzugsweise bis zu 45 Mol-%, bezogen auf die Summe von Ester- und Carbonatgruppierung, Carbonatgruppierungen enthalten.

Die homogene Einarbeitung der Komponente B) in die aromatischen Polyester oder Polyestercarbonate kann beispielsweise durch Lösungscompoundierung der Komponente B) und der aromatischen Polyester oder Polyestercarbonate unter erneuter Granulierung erfolgen.

Besonders vorteilhaft ist die Zudosierung von Lösungen der Komponente B) während der Herstellung der aromatischen Polyester oder Polyestercarbonate der Komponente A), vorzugsweise vor der Aufarbeitung des Reaktionsgemisches, da dadurch die Isolierung der Polymere wesentlich leichter ist.

Die erfindungsgemäßen Mischungen können Stabilisatoren, Entformungsmittel, Weichmacher und Füllstoffe, wie Glasfasern, Glaskugeln, Asbest- und Kohlenstoffasern, Kieselgur, Kaolin, Gesteinsmehl und Pigmente, enthalten. Sie können nach üblichen Verfahren in Spritzgießmaschinen zu Formkörpern oder in Extrudern zu Halbzeug verarbeitet werden, z.B. zu Lampenhalterungen, Lichtschaltern, Steckern sowie Gehäusen für Elektrogeräte.

Die erfindungsgemäßen Pfropfcopolymerisate der Formel (I) zeichnen sich gegenüber den bekannten linearen Polyestern oder Polyestercarbonaten durch verbessertes Fließverhalten der Schmelze aus und dienen insbesondere als Fließhilfsmittel für aromatische Polyester und Polyestercarbonate sowie als Verträglichkeitsvermittler in Blends aus Vinylpolymeren und aromatischen Polyestern. Dadurch wird die Verarbeitbarkeit von aromatischen Polyestern und Polyestercarbonaten erheblich verbessert, ohne daß die Wärmeformbeständigkeit und Zähigkeit der aromatischen Polyester und Polyestercarbonate wesentlich beeinträchtigt wird.

Außerdem ist es überraschend, daß es gelingt, thermoplastisch verarbeitbare Pfropfcopolymere auf der Basis von Vinylpolymeren mit aufgepfropften Polyestern oder Polyestercarbonat-Seitenketten herzustellen, besonders auf Basis hochmolekularer Vinylpolymeren, da die für die Synthese der aromatischen Polyester- bzw. Polyestercarbonat-Seitenketten einzusetzenden aromatischen Dicarbonsäurehalogenide außerordentlich reaktiv sind (im Vergleich zu beispielsweise Phosgen oder zu einem aromatischen Bischlorkohlensäureester, s. Dennis N. Kivill, "The Chemistry of Acylhalides", Kapitel 12, ed. by S. Patai, Interscience Publisher, 1972) und deshalb erwartet werden mußte, daß vernetzte statt gepfropfte polymere Produkte entstehen würden.

## Beispiele

Die angegebenen relativen Lösungsviskositäten wurden bei einer Konzentration von 0,5 g Polymer/100 ml Methylenchlorid ermittelt. Die Gewichtsmittel-Molekulargewichte wurden durch Gelpermeationschromatographie ermittelt ($M_w$).

A. Herstellung der Pfropfcopolymere

a) Synthese der Vinylpolymerenrückgrate :

R I = ein Polystyrolrückgrat (Mischpolymerisat), das durch Copolymerisation von 190 g Styrol und 10 g Trimethyl-(4-isopropenyl-phenoxy)-silan in 300 g Chlorbenzol in Gegenwart von 16,5 g Azodiisobutyronitril unter Stickstoff bei 80°C herstellt wurde. Das Produkt wurde mit Methanol gefällt. Die relative Lösungsviskosität betrug $\eta_{rel}$= 1,046, das entspricht einem Gewichtsmittel-Molekulargewicht von 11 kg/Mol (l = 37,6, s = 1,4,s · l = 51,6).

R II = ein Polystyrolrückgrat, das durch Copolymerisation von 2000 g Styrol und 51,2 g Trimethyl-(4-isopropenylphenoxy)-silan in Gegenwart von 2 g Azodiisobutyronitril unter Stickstoff bei 80°C innerhalb von 24 h herstellt wurde. Die relative Lösungsviskosität betrug $\eta_{rel}$ = 1,604, das entspricht einem $M_w$ von 320 kg/Mol (s = 15,5, l = 77,4, s · l = 1199,7).

R III = ein Polystyrolrückgrad, das durch Copolymerisation von 195 g Styrol und 5 g Trimethyl-(4-isopropenylphenoxy)-silan in Gegenwart von 0,2 g Azodiisobutyronitril unter Stickstoff bei 80°C innerhalb von 24 h hergestellt wurde. Die relative Lösungsviskosität betrug $\eta_{rel}$ = 1,779, das entspricht einem $M_w$ von 430 kg/Mol (l = 77,3, s = 19,2,s · l = 1489,16).

R IV = ein Polystyrolrückgrat, das durch Copolymerisation von 1000 g Styrol und 25,6 g Trimethyl-(4-isopropenylphenoxy)-silan in Gegenwart von 1 g Azodiisobutyronitril unter Stickstoff bei 80°C hergestellt wurde. Die relative Lösungsviskosität betrug $\eta_{rel}$ = 1,857, das entspricht einem $M_w$ von 480 kg/Mol (l = 77,4, s = 25,2,s · l = 1950,48).

R V = ein Polymethylmethacrylatrückgrat, das durch Copolymerisation von 2000 g Methylmethacrylat und 20 g Trimethyl-(4-isopropenylphenoxy)-silan gelöst in 2000 g Chlorbenzol in Gegenwart von 8 g Azodiisobutyronitril unter Stickstoff bei 80°C, innerhalb von 8 h hergestellt wurde, Die relative Lösungsviskosität betrug $\eta$rel = 1,202, das entspricht einem Mw von 62,5 kg/Mol (l = 206, s = 1,6,s · l = 329,6).

R VI = ein Polystyrol-co-acrylnitrilrückgrat, das durch Terpolymerisation von 160 g Styrol, 35 g Acrylnitril und 5 g Trimethyl-(4-isopropenylphenoxy)-silan gelöst in 200 g Chlorbenzol in Gegenwart von 4,5 g Azodiisobutyronitril unter Stickstoff bei 80°C innerhalb von 8 h hergestellt wurde. Die relative Lösungsviskosität betrug $\eta$rel = 1,199, das entspricht einem Mw von 75,4 kg/Mol (l = 90,6, s = 4,8, s · l = 434,88).

b) Pfropfung der Vinylpolymerenrückgrate :

Pfropfcopolymer P I :

22,8 g (0,1 Mol) 2,2-(4-Hydroxyphenyl)-propan, im weiteren Text als Bisphenol A bezeichnet, wurde in einer Mischung aus 10 g (0,25 Mol) Natriumhydroxid und 560 ml Wasser unter Stickstoffatmosphäre gelöst. Nach Zugabe von 644 mg Tetrabutylammoniumbromid ($\hat{=}$ 2 Mol-%, bezogen auf Bisphenol A), 20 g Styrolrückgrat R I ($\hat{=}$ 4,85 Mol% Kettenabbrecher bezogen auf Bisphenol A) and 450 ml Methylenchlorid wurden unter kräftigem rühren innerhalb von 15 Min. bei Raumtemperatur 51,78 g (= 0,102 Mol) einer 40%igen Lösung von Iso- und Terephthalsäuredichlorid (1 : 1) in Chlorbenzol sowie 450 mg tert.-Butylphenol ($\hat{=}$ 3 Mol-%, bezogen auf Bisphenol A) in 50 ml Methylenchlorid gleichzeitig zugetropft. Man rührt noch 1 Std. nach und trennt zur Aufarbeitung die wäßrige Phase ab. Die organische Phase wird mit Wasser elektrolytfrei gewaschen und anschließend eingedampft (a = 1, q = 25,45).

Für das erhaltene Produkt wurde eine Lösungsviskosität von $\eta_{rel}$ = 1,189 ermittelt.

Pfropfcopolymer P II :

2,223 kg (9,75 Mol) Bisphenol A wurden in einer Mischung aus 2,3 kg (2,6 Mol) einer 45%igen Natron lauge und 40 l Wasser unter Stickstoffatmosphäre gelöst. Nach Zugabe von 62,79 g Tetrabutylammoniumbromid ($\hat{=}$ 1 Mol-%, bezogen auf Bisphenol A), 43,88 g p-tert.-Butylphenol ($\hat{=}$ 3 Mol%, bezogen auf Bisphenol A), 1,95 kg

des Polystyrolsrückgrats R II gelöst in 10 l Methylenchlorid, weiteren 20 kg Methylenchlorid und 20 l Chlorbenzol wurde unter kräftigem Rühren innerhalb von 15 Min. 5,049 kg (10,2 Mol) einer 40%igen Lösung von Iso-und Terephthalsäuredichlorid (1 : 1) in Chlorbenzol zugetropft, man rührt noch eine Std. nach und trennt die wäßrige Phase ab. Die organische Phase wird mit Wasser elektrolytfrei gewaschen und anschließend eingedampft. Die ermittelte Lösungsviskosität betrug $\eta_{rel}$ = 1,504 (a = 1, q = 36,8).

Pfropfcopolymer P III

Analog Beispiel 1 wurden statt 20 g Styrolrückgrat R I 20 g Styrolrückgrat R III ($\hat{=}$ 2,42 Mol% Kettenabbrecher, bezogen auf Bisphenol A) eingesetzt.

Die Lösungsviskosität des erhaltenen Produkts betrug $\eta_{rel}$ = 1,429 (a = 1, q = 36,8).

Pfropfcopolymer P IV :

22,8 g (0,1 Mol) Bisphenol A wurden in einer Mischung aus 20 g (0,5 Mol) Natriumhydroxid und 400 ml Wasser unter Stickstoffatmosphäre gelöst. Nach Zugabe von 450 mg 4-tert.-Butylphenol (= 3 Mol-%, bezogen auf Bisphenol A), 20 g Styrolrückgrat R III ($\hat{=}$ 2,42 Mol% Kettenabbrecher, bezogen auf Bisphenol A) und 450 ml Methylenchlorid wurden unter kräftigem Rühren innerhalb von 15 Min. bei Raumtemperatur 25,9 g (0,0523 Mol) einer 40%igem Lösung von Iso- und Terephthalsäuredichlorid (1 : 1) in Chlorbenzol zugetropft. Anschließend wurden 8 g (0,08 Mol) Phosgen eingeleitet und 0,14 ml N-Ethylpiperidin zugesetzt. Man rührt noch eine Std. nach und trennt die wäßrige Phase ab. Die organische Phase wird mit Wasser elektrolytfrei gewaschen und anschließend eingedampft. Die ermittelte Lösungsviskosität betrug $\eta_{rel}$ = 1,356, a = 0,8, q = 36,8.

Pfropfcopolymer P V :

wurde analog Pfropfcopolymer P I hergestellt, jedoch wurden statt 20 g Polystyrolrückgrat P I 20 g Polymethylmethacrylatrückgrat R V ($\hat{=}$ 0,96 Mol% Kettenabbrecher, bezogen auf Bisphenol A) eingesetzt ; a = 1, q = 50.

Die Lösungsviskosität des erhaltenen Produkts betrug $\eta$rel = 1,213.

Pfropfcopolymer P VI :

wurde analog Pfropfcopolymer P I hergestellt, jedoch wurden statt 20 g Polystyrolrückgrat P I 20 g Polystyrol-co-acrylnitrilrückgrat P VI ($\hat{=}$ 2,42 Mol% Kettenabbrecher, bezogen auf Bisphenol A) eingesetzt.

Die Lösungsviskosität des enthaltenen Produkts betrug $\eta$rel = 1,258 ; a = 1, q = 35.

<u>B. Herstellung der Polyester und Polyestercarbonate</u>

<u>Polyester (APE) (analog EP 0119554)</u>

Herstellung eines aromatischen Polyesters aus Bisphenol A und äquimolaren Mengen Iso- und Terephthalsäurechlorid.

In 7,52 kg 45%iger wäßriger Natronlauge und 160 l Wasser wurden 9,12 kg Bisphenol A, 24 g Natriumborhydrid sowie 138 g Phenol (3,67 Mol-%, bezogen auf Bisphenol A) unter Stickstoffatmosphäre gelöst. In diese Lösung wurden 148,8 g (1 Mol-%) Triphenylethylphosphoniumbromid eingetragen und anschließend 60 kg Dichlormethan sowie 48 kg Chlorbenzol zugegeben.

In das intensiv gerührte Zweiphasengemisch wurde unter Wasserkühlung innerhalb von 15 Minuten bei einer Innentemperatur von 20 bis 25°C und bei einem pH-Wert von 12 bis 13 eine Lösung aus je 4141,2 g Iso- und Terephthalsäuredichlorid in 12 l Dichlormethan eingetragen.

Nach beendeter Zugabe wurde 15 Minuten nachgerührt, anschließend die alkalisch-wäßrige Phase abgetrennt, die organische Phase zunächst mit verdünnter Phosphorsäure, dann mit Wasser gewaschen, bis das Waschwasser eine Leitfähigkeit von 1 bis $10^{-5}$ S/cm besaß und dann die Hauptmenge des Dichlormethans unter Normaldruck abdestilliert (Sumpftemperatur bis ca. 100°C).

Die verbliebene, noch heiße Lösung des aromatischen Polyesters in Chlorbenzol wurde bei 320°C in einem Vakuum-Doppelwellenextruder (Schneckendurchmesser 32 mm) bei ca. 0,014 bar bis auf einen Restgehalt von ca. 50 ppm vom Chlorbenzol befreit, der aromatische Polyester als Strang abgezogen und granuliert. Der aromatische Polyester besaß eine relative Viskosität $\eta_{rel}$ von 1,273, gemessen an einer Dichlormethanlösung bei 25°C, die pro 100 ml Lösung 0,5 g Polyester enthielt.

Polyestercarbonat (PEC) (analog EP 0119554)

Herstellung eines Polyestercarbonats mit 20 Mol-% Carbonester-Anteil, statistisch verteilt, aus Bisphenol A und Iso- und Terephthalsäurechlorid im Molverhältnis 1 : 1.

In einen Stahlkessel mit intensiv wirkendem Rührer wurden unter Stickstoffatmosphäre 2,736 kg Bisphenol A, 1,5 l 45 %ige wäßrige Natronlauge, 8,4 g Natriumborhydrid, 120 g Triethylbenzylammoniumchlorid, 36 l Wasser, 11 l Dichlormethan und 11 l Chlorbenzol gefüllt und das Gemisch bis zur vollständigen Lösung des Bisphenol A gerührt.

In das intensiv gerührte Zweiphasengemisch wurde dann unter Wasserkühlung innerhalb 15 Minuten eine Lösung aus je 1948 g Iso- und Terephthalsäuredichlorid und 46,3 g (4,1 Mol-%, bezogen auf Bisphenol A) Phenol in 3 l Dichlormethan gegeben und 1 Stunde nachgerührt. Die Temperatur des Reaktionsgemisches überstieg dabei nicht 22°C. Durch Zugabe von Natriumhydroxid wurde der pH-Wert des Gemisches bei 12 bis 13 gehalten.

Unter fortgesetztem Rühren erfolgte die Einleitung von 320 g Phosgen, wobei die Temperatur wieder bei ca. 20°C und der pH-Wert bei 12 bis 13 gehalten wurden. Nach der Einleitung des Phosgens wurden 120 ml einer 4%igen wäßrigen Lösung von Triethylamin zugesetzt und noch 1 Stunde nachgerührt.

Nach Abtrennung der wäßrig-alkalischen Phase wurde die organische Phase zunächst mit verdünnter Phosphorsäure, dann mit Wasser salzfrei gewaschen und ca. 50% des Dichlormethans unter Normaldruck abdestilliert. Die verbliebene Lösung wurde mit 15 l Chlorbenzol verdünnt, die Abdestillation des Dichlormethans fortgesetzt, bis die Sumpftemperatur ca. 80°C betrug, das Polyestercarbonat sodann im Vakuumextruder bei 320°C vom Chlorbenzol befreit, als Strang abgezogen und granuliert. Das Polyestercarbonat besaß eine relative Viskosität $\eta_{rel}$ von 1,294, gemessen wie oben für den Polyester angegeben.

Die folgenden Beispiele sollen die Herstellung der leichterfließenden Mischungen und deren Prüfung verdeutlichen, ohne einschränkend zu wirken.

Die Messung der Schmelzviskosität ($\eta_{melt}$) erfolgte mit einem Contraves-Rheomat 30 bei 320°C. Die Bestimmung der Glastemperatur ($T_G$) erfolgt mit dem thermoanalytischen Mess- und Auswertesystem Mettler TC 10 A.

Beispiel 1

90 Teile Polyestercarbonat, gelöst in 900 Teilen Methylenchlorid wurden mit 10 Teilen des Pfropfcopolymers P I, gelöst in 100 Teilen Methylenchlorid, gemischt. Anschließend wurde die Lösung bei 60°C im Vakuumtrockenschrank eingedampft. Von der erhaltenen Mischung wurde die Schmelzviskosität ($\eta_{melt}$) bei einer Schubspannung ($\tau$) von 1000 Pa zu 1600 Pa.s ermittelt. Die Glastemperatur ($T_G$) beträgt 181°C.

Beispiele 2 bis 6

Es wurden jeweils 90 Teile Polyestercarbonat mit 10 Teilen Pfropfcopolymer P II bis P VI analog Beispiel 1 gemischt. Die Zusammensetzung der Mischung, die Schmelzviskosität und die Glastemperatur sind in Tabelle 1 zusammengefaßt.

Beispiele 7 und 8

Es wurde wie bei Beispiel 1 gemischt, jedoch wurde der aromatische Polyester als Harz verwendet. Die Ergebnisse sind in Tabelle 2 zusammengefaßt.

Beispiel 9

Gemischt wurden 90 Teile Polyestercarbonat und 10 Teile Pfrofpcopolymer P II durch Compoundierung an einer ZSK 32 (Schneckenextruder) bei 330 bis 350°C. Die Werte für die Schmelzviskosität und die Glastemperatur wurden mit in Tabelle 1 aufgelistet.

Tabelle 1 :

Leichterfließende Polyestercarbonatmischungen aus 90 Teilen Polyestercarbonat und 10 Teilen Pfropfcopolymer

| Beispiel | Pfropfcopolymer | $\eta_{melt}$ (Pa.s) | $\tau$ (Pa) | $T_G$ (°C) |
|---|---|---|---|---|
| 1 | P I | 1600 | 1000 | 181 |
| 2 | P II | 980 | 1000 | 182 |
| 3 | P III | 1280 | 1000 | 181 |
| 4 | P IV | 1275 | 1000 | 183 |
| 5 | P V | 400 | 1000 | 178 |
| 6 | P VI | 1100 | 1000 | 180 |
| 9 | P II | 1050 | 1000 | 181 |
| PEC (Vergleich) | - | 2200 | 1000 | 185 |

Tabelle 2 :

Leichterfließende Polyestermischungen aus 90 Teilen Polyester und 10 Teilen Pfropfcolymer

| Beispiel | Pfropfcopolymer | $\eta_{melt}$ (Pa.s) | $\tau$ (Pa) | $T_G$ (°C) |
|---|---|---|---|---|
| 7 | P I | 5156 | 1000 | 190 |
| 8 | P III | 5190 | 1000 | 192 |
| APE (Vergleich) | - | 7800 | 1000 | 196 |

**Patentansprüche**

1. Pfropfcopolymere der Formel

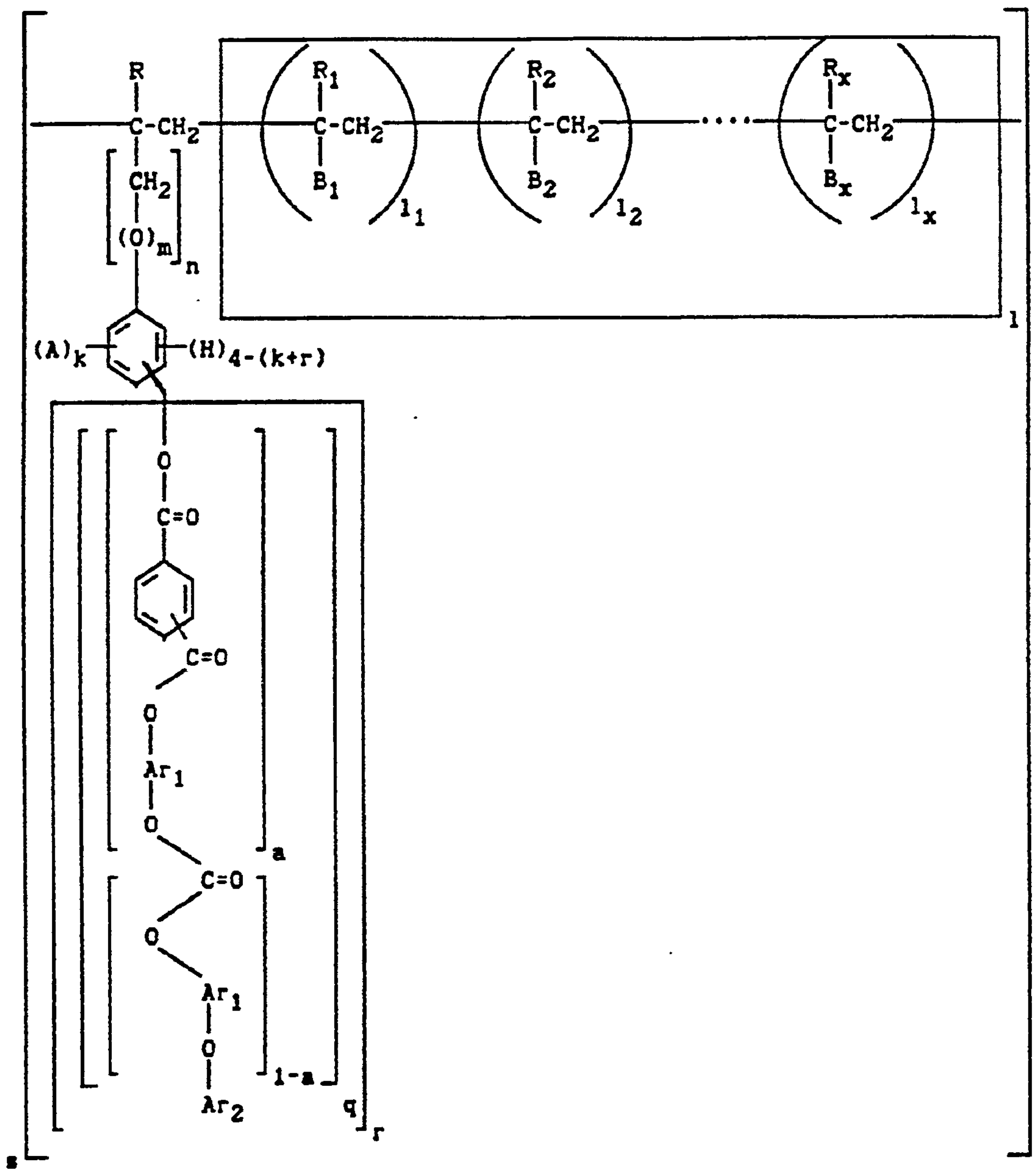

,

worin

| | |
|---|---|
| R, $R_1$, $R_2$...$R_x$ | gleich oder verschieden sein können und für Wasserstoff, $C_1$-$C_6$-Alkyl, $C_3$-$C_6$-Cycloalkyl, $C_6$-$C_{12}$-Aryl, $C_7$-$C_{15}$-Alkylaryl oder $C_7$-$C_{13}$-Arylalkyl stehen, |
| A | Halogen, $C_1$-$C_{10}$-Alkyl, $C_6$-$C_{12}$-Aryl oder $C_1$-$C_7$-Alkyloxy bedeutet, |
| $B_1$, $B_2$...$B_x$ | gleich oder verschieden sein können und für —CN, —$CO_2$R, —OR oder für die Formel |

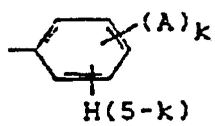

stehen, in der R und A die obige Bedeutung haben,

| | |
|---|---|
| $Ar_1$ | der Formel |

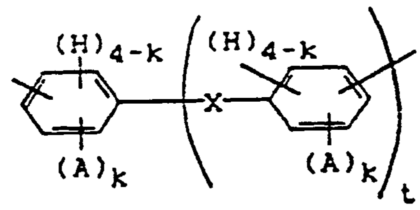

entspricht, in der

A die obige Bedeutung hat und

X für O, S, $SO_2$, CO, $C_3$-$C_8$-Cycloalkyliden steht oder eine chemische Einfachbindung bedeutet oder für $Z_2$-C-$Z_1$ steht, worin $Z_1$ und $Z_2$ die Bedeutung von R haben und t = 0 oder 1 sein kann,

$Ar_2$ für einen monofunktionellen Rest der Formeln

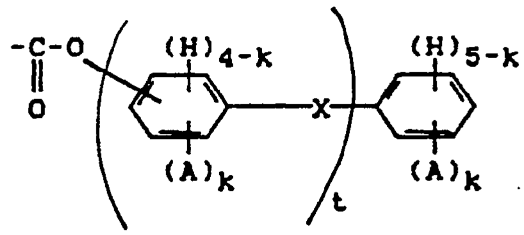

oder

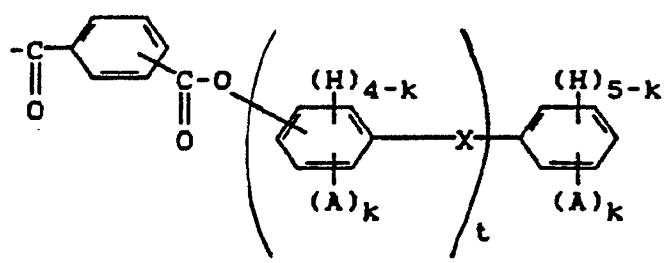

steht, worin

A, X und t die obige Bedeutung besitzen und
k 0, 1, 2, 3 oder 4 ist,
l für eine Zahl von 5 bis 200 steht,

$l_1 + l_2 + ... l_x = 1$ ist,
m und n 0 oder 1 bedeuten,

a 1 mein kann oder Werte zwirschen 0,5 und 1 annehmen kann,
g eine Zahl von 5 bis 100 ist,
r 1 oder 2 und
s eine Zahl von 1 bis 1000 bedeuten, wobei das Produkt aus s und l eine Zahl von 5 bis 200000 ergibt.

2. Verfahren zur Herstellung der Pfropfcopolymeren gemäß Anspruch 1, dadurch gekennzeichnet, daß man Mischpolymerisate mit seitenständigen funktionellen Gruppen der Formel

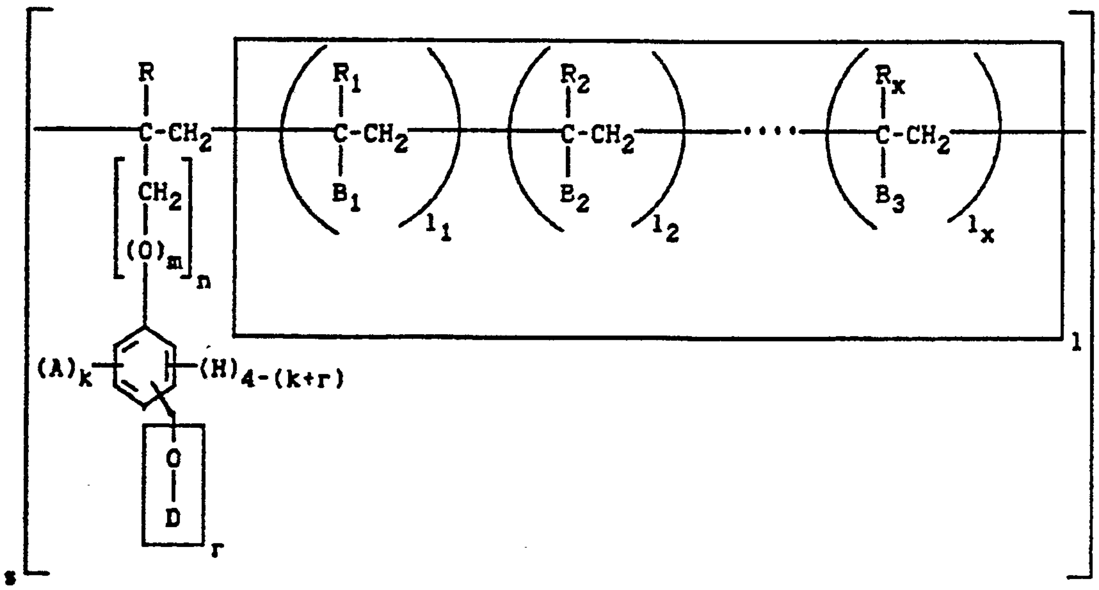
,

worin

D für Wasserstoff oder einen Chlorkohlensäureester-, Monophenylkohlensäureester- oder Trimethylsilylrest steht und

R, $R_1$, $R_2$...$R_x$, A, B sowie k, $l_1$, $l_2$... $l_x$, m, n, r und s die obengenannte Bedeugtung besitzen,

mit zweiwertigen, gegebenenfalls kernsubstituierten Phenolen, aromatischen Dicarbonsäurehalogeniden und carbonatbildenden Verbindungen in einem Phasengrenzflächenverfahren unter Verwendung von Säureakzeptoren bei 0 bis 50°C, gegebenenfalls in Gegenwart von einwertigen Phenolen und gegebenenfalls unter Zusatz von Katalysatoren in bekannter Weise umsetzt.

3. Verwendung der Pfropfcopolymeren gemäß Anspruch 1 als Fließhilfsmittel für aromatische Polyester und Polyestercarbonate und als Verträglichkeitsvermittler in Blends aus Vinylpolymeren und aromatischen Polyestern.

4. Thermoplastische, leichter fließende Mischungen aus

A) 75 bis 99,5 Gew.-% eines aromatischen Polyesters und aromatischen Polyestercarbonats aus Diphenolen und Iso- und/oder Terephthalsäure sowie Phosgen oder anderen carbonatbildenden Verbindungen und

B) 0,5 bis 25 Gew.-% des Pfropfcopolymeren gemäß Anspruch 1,

wobei die Summe der Kompenenten A) und B) sich zu 100 Gew.-% ergänzen.

5. Mischungen gemäß Anspruch 4 aus 85 bis 98 Gew.-% an Komponente A) und 2 bis 15 Gew.-% an Komponente B).

6. Mischungen gemäß Ansprüchen 4 und 5 aus 90 bis 95 Gew.-% an Komponente A) und 5 bis 10 Gew.-% an Komponente B).

## Revendications

1. Copolymères greffés de formule

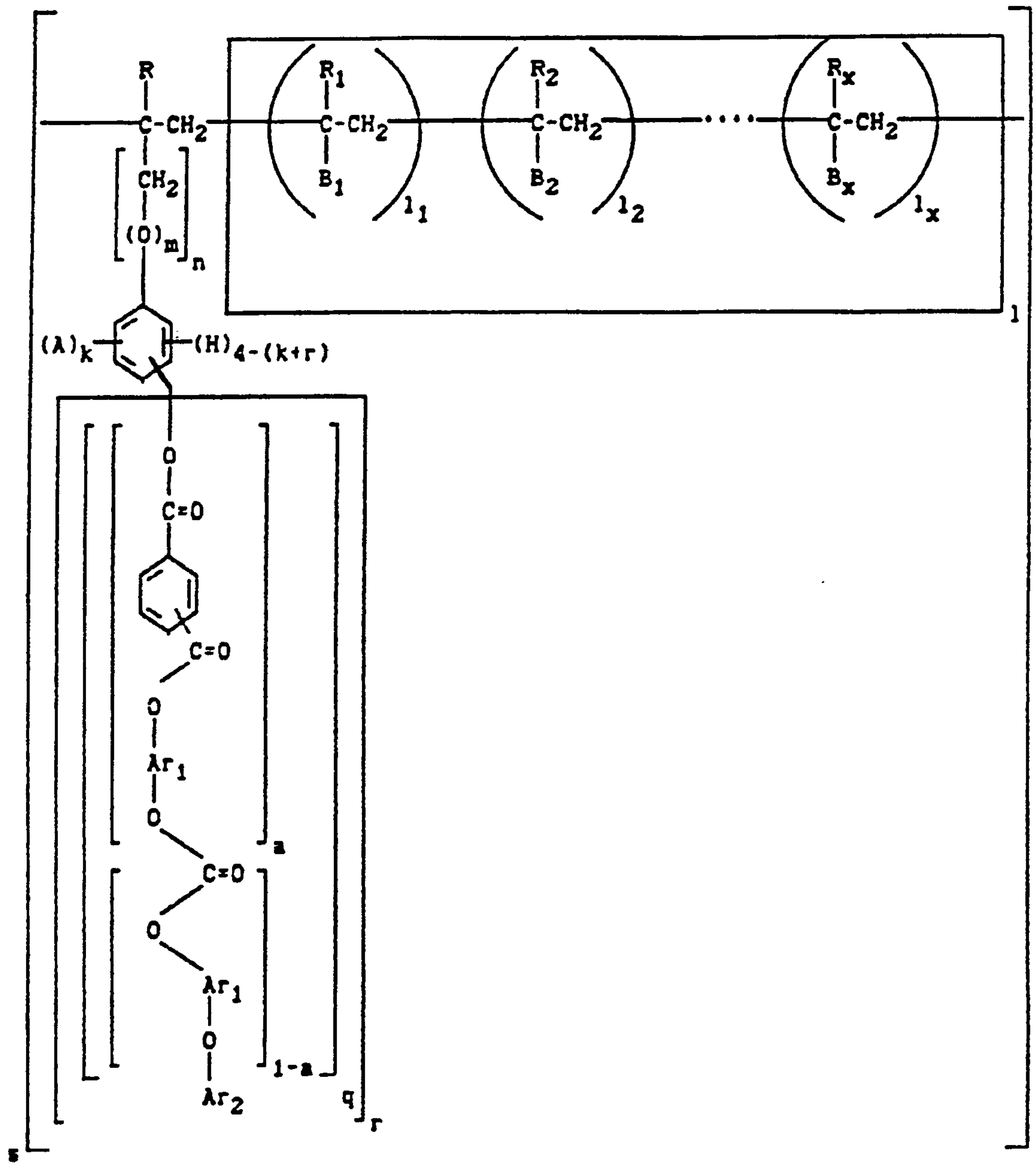

,

dans laquelle

R, $R_1$, $R_2$...$R_x$ peuvent être identiques ou différents et représentent l'hydrogène, un groupe alkyle en $C_1$ à $C_6$, cycloalkyle en $C_3$ à $C_6$, aryle en $C_6$ à $C_{12}$, alkylaryle en $C_7$ à $C_{15}$ ou arylalkyle en $C_7$ à $C_{13}$,

A est un halogène, un groupe alkyle en $C_1$ à $C_{10}$, aryle en $C_6$ à $C_{12}$ ou alkyloxy en $C_1$ à $C_7$,

$B_1$, $B_2$...$B_x$ peuvent être identiques ou différents et représentent —CN, —$CO_2$R, —OR ou répondent à la formule

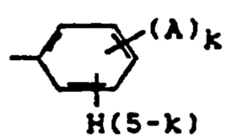

dans laquelle R et A ont la définition indiquée ci-dessus,

$Ar_1$ répond à la formule

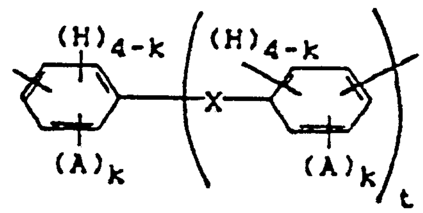

dans laquelle

A : a la définition indiquée ci-dessus et

X représente O, S, $SO_2$, CO, un groupe cycloalkylidène en $C_3$ à $C_6$ ou une liaison chimique simple ou un groupe $Z_2$-C-$Z_1$ dans lequel $Z_1$ et $Z_2$ ont la définition de R et t peut avoir la valeur 0 ou 1,

$Ar_2$ représente un reste monofonctionnel de formules

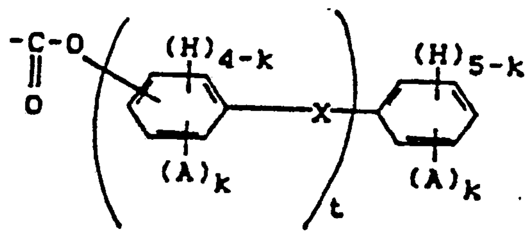

ou

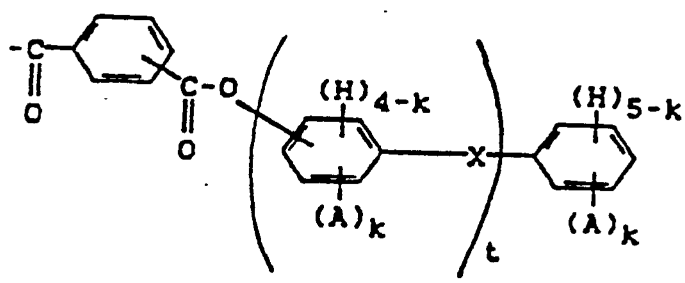

où

A, X et t ont la définition indiquée ci-dessus et

k a la valeur 0, 1, 2, 3 ou 4,

l est un nombre de 5 à 200,

$l_1 + l_2 + \ldots l_x$ égal à 1,

m et n ont la valeur 0 ou 1,

a peut être égal à 1 ou peut avoir des valeurs comprises entre 0,5 et 1,

q est un nombre de 5 à 100,

r a la valeur 1 ou 2 et

s est un nombre de 1 à 1000, le produit de s par 1 représentant un nombre de 5 à 200000.

2. Procédé de production des copolymères greffés suivant la revendication 1, caractérisé en ce qu'on fait réagir des copolymérisats porteurs de groupes fonctionnels latéraux de formule

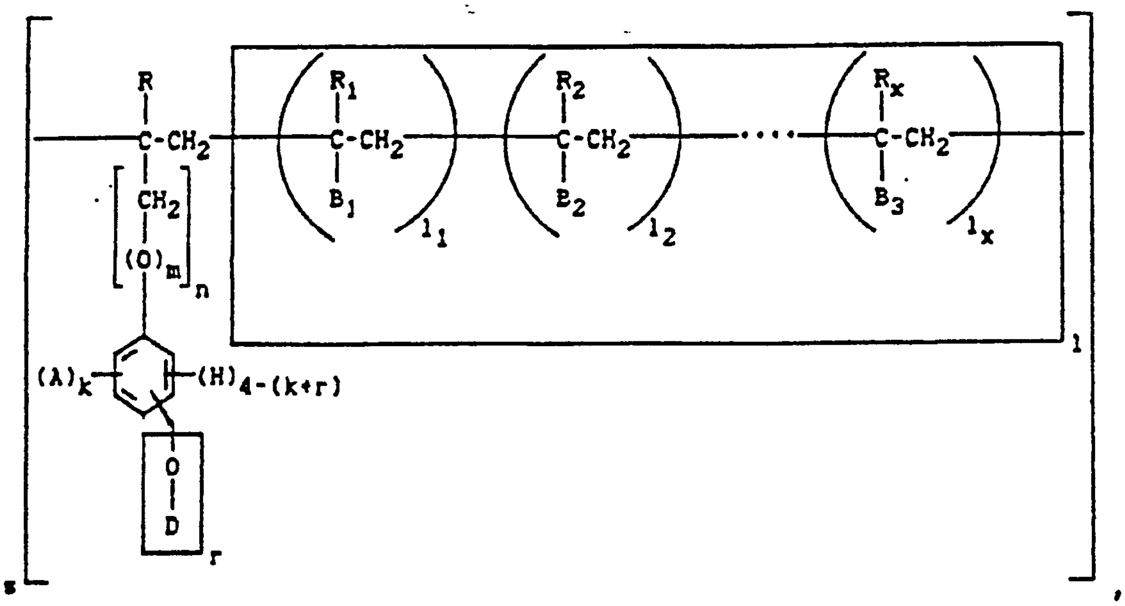

dans laquelle

D représente l'hydrogène ou un reste ester d'acide chlorocarbonique, ester d'acide monophényl-carbonique ou triméthylsilyle et

R, $R_1$, $R_2$...$R_x$, A, B ainsi que k, $l_1$, $l_2$... $l_x$, m, n, r et s ont la définition indiquée ci-dessus,

avec des phénols divalents, éventuellement substitués sur le noyau, des halogénures d'acides dicarboxyliques aromatiques et des composés générateurs de carbonates dans un procédé à l'interface entre phases avec utilisation d'accepteurs d'acides à 0-50°C, le cas échéant en présence de phénols monovalents et avec addition éventuelle de catalyseurs, d'une manière connue.

3. Utilisation de copolymères greffés suivant la revendication 1 comme agents auxiliaires fluidifiants pour polyesters et polyestercarbonates aromatiques et comme adjuvants de compatibilité dans des mélanges de polymères vinyliques et de polyesters aromatiques.

4. Mélanges thermoplastiques à écoulement facilité, constitués de

A) 75 à 99,5% en poids d'un polyester aromatique et d'un polyestercarbonate aromatique de diphénols et d'acide iso- et/ou téréphtalique ainsi que de phosgène ou d'autres composés générateurs de carbonates et

B) 0,5 à 25% en poids du copolymère greffé suivant la revendication 1,

la somme des composants A) et B) faisant un total de 100% en poids.

5. Mélanges suivant la revendication 4, constitués de 85 à 98% en poids de composant A) et de 2 à 15% en poids de composant B).

6. Mélanges suivant les revendications 4 et 5, constitués de 90 à 95% en poids de composant A) et de 5 à 10% en poids de composant B).

## Claims

1. Graft copolymers corresponding to the formula

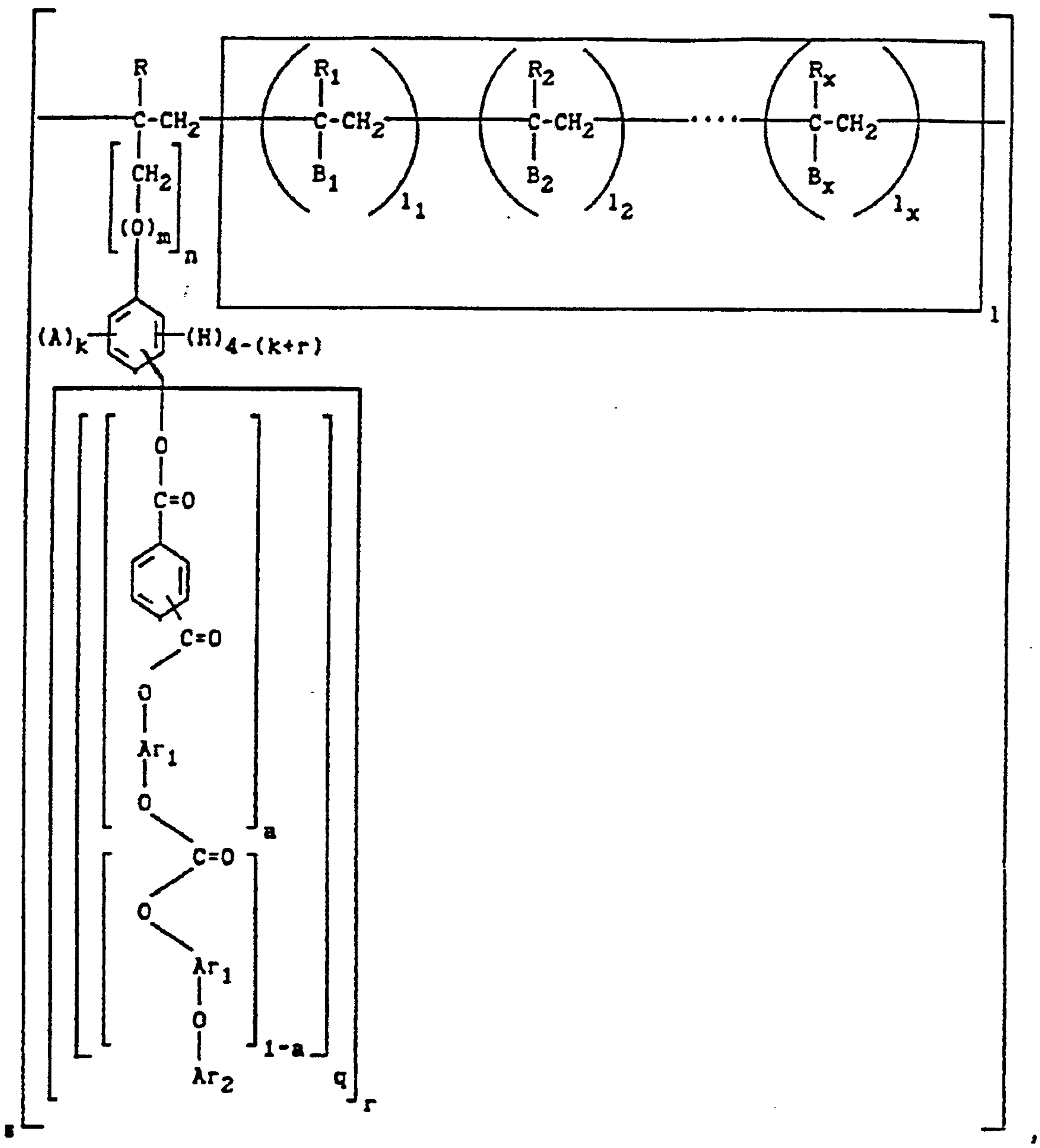

in which

| | |
|---|---|
| R, $R_1$, $R_2$...$R_x$ | may be the same or different and represent hydrogen, $C_{1-6}$ alkyl, $C_{3-6}$ cycloalkyl, $C_{6-12}$ aryl, $C_{7-15}$ alkylaryl or $C_{7-13}$ arylalkyl, |
| A | represents halogen, $C_{1-10}$ alkyl, $C_{6-12}$ aryl or $C_{1-7}$ alkyloxy, |
| $B_1$, $B_2$...$B_x$ | may be the same or different and represent —CN, —$CO_2R$, —OR or correspond to the formula |

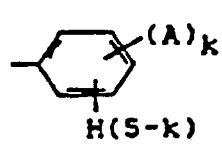

where R and A are as defined above,

Ar$_1$ corresponds to the formula

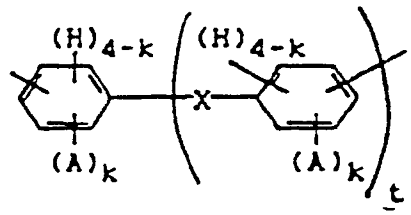

in which

A is as defined above and

X represents O, S, $SO_2$, CO, $C_{3-6}$ cycloalkylidene or a single chemical bond or $Z_2$-C-$Z_1$, where $Z_1$ and $Z_2$ have the same meaning as R and t may be 0 or 1,

Ar$_2$ represents a monofunctional group corresponding to the formula

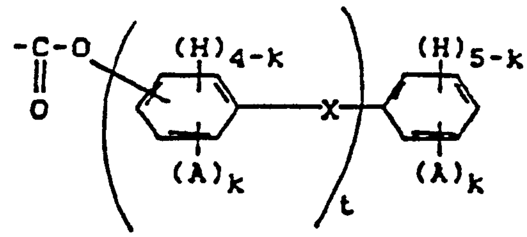

or

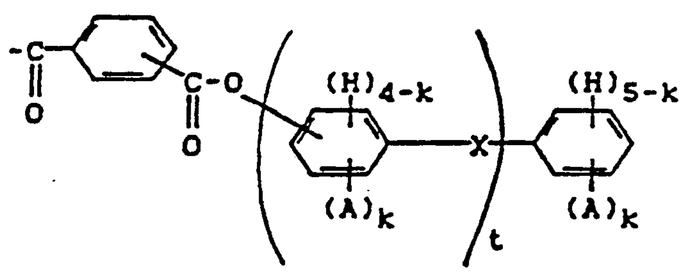

in which

A, X and t are as defined above and

k is 0, 1, 2, 3 or 4,

l is a number of 5 to 200,

$l_1 + l_2 + ... l_x = 1$,

m and n = 0 or 1,

a may be 1 or may assume values of 0.5 to 1,

q is a number of 5 to 100,

r is 1 or 2 and

s is a number of 1 to 1,000, the product of s and l being a number of 5 to 200,000.

2. A process for the production of the graft copolymers claimed in claim 1, characterized in that copolymers containing lateral functional groups corresponding to the formula

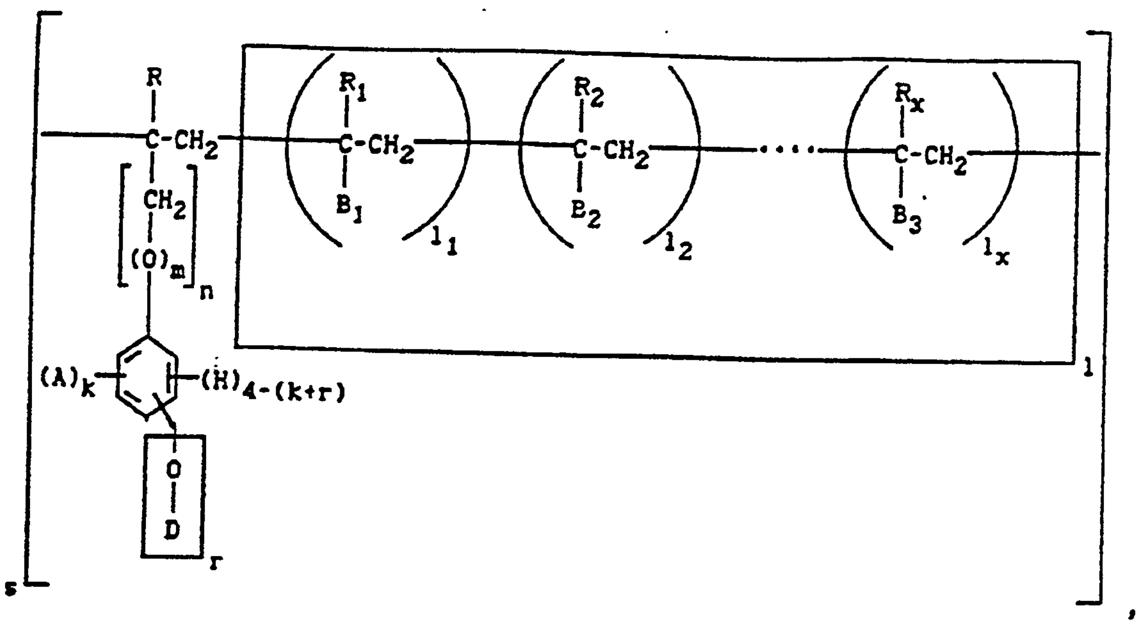

in which

D represents hydrogen or a chlorocarbonic acid ester, monophenyl carbonic acid ester or trimethyl silyl group and

R, $R_1$, $R_2$...$R_x$, A, B and k, $l_1$, $l_2$... $l_x$, m, n, r and s are as defined above,

are reacted in known manner with dihydric, optionally nucleus-substituted phenols, aromatic dicarboxylic acid halides and carbonate-forming compounds by the interfacial method using acid acceptors at 0 to 50°C, optionally in the presence of monohydric phenols and optionally in the presence of catalysts.

3. The use of the graft copolymers claimed in claim 1 as flow aids for aromatic polyesters and polyester carbonates and as compatibilizers in blends of vinyl polymers and aromatic polyesters.

4. Thermoplastic, relatively free-flowing blends of

A) 75 to 99.5% by weight of an aromatic polyester and aromatic polyester carbonate of diphenols and iso- and/or terephthalic acid and also phosgene or other carbonate-forming compounds and

B) 0.5 to 25% by weight of the graft copolymer claimed in claim 1,

the sum of components A) and B) making 100% by weight.

5. Blends as claimed in claim 4 of 85 to 98% by weight component A) and 2 to 15% by weight component B).

6. Blends as claimed in claims 4 and 5 of 90 to 95% by weight component A) and 5 to 10% by weight component B).